# EUROPÄISCHE PATENTSCHRIFT

(11) **EP 3 454 086 B1**
(45) Veröffentlichungstag und Bekanntmachung des Hinweises auf die Patenterteilung: **29.01.2020**
(21) Anmeldenummer: 18190982.1
(22) Anmeldetag: 27.08.2018
(51) Int. Cl.: G01S 17/89, G01S 7/10, G01S 7/486

(54) **OPTOELEKTRONISCHER SENSOR UND VERFAHREN ZUR POSITIONSERFASSUNG EINES OBJEKTS**
OPTOELECTRONIC SENSOR AND METHOD FOR DETECTING THE POSITION OF AN OBJECT
CAPTEUR OPTOÉLECTRONIQUE ET PROCÉDÉ DE DÉTECTION DE LA POSITION D'UN OBJET

(30) Priorität: 11.09.2017 DE 102017120953
(43) Veröffentlichungstag der Anmeldung: 13.03.2019
(73) Patentinhaber: Sick AG, 79183 Waldkirch (DE)
(72) Erfinder: ZWÖLFER, Ulrich, 79183 Waldkirch (DE)

(56) Entgegenhaltungen:
- EP-A1- 2 475 957
- DE-A1-102014 107 799
- DE-B3-102012 223 689
- US-A1- 2014 313 376
- US-A1- 2015 285 625

## Beschreibung

Die Erfindung betrifft einen optoelektronischen Sensor und ein Verfahren zur Positionserfassung eines Objekts nach dem Oberbegriff von Anspruch 1 beziehungsweise 14.

Für eine millimeter- oder sogar submillimetergenaue Positionierung von Werkstücken beispielsweise in der Produktion ist es üblich, Kamerasysteme einzusetzen. Das ist nicht nur teuer und aufwändig, zudem bestehen oft noch Schwierigkeiten, den notwendigen Bauraum zur Verfügung zu stellen. Durch Auswertung von zweidimensionalen Konturbildern ohne Tiefeninformation ist die Positionierung außerdem fehlerbehaftet. Prinzipiell lässt sich das mit einer 3D-Kamera ausgleichen, aber ein solches System ist erst recht überdimensioniert und auch vergleichsweise langsam.

Es sind andererseits Distanzsensoren oder Entfernungstaster nach dem Lichtlaufzeitprinzip bekannt, welche die Laufzeit eines Lichtsignals messen, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Ein einzelner Distanzwert reicht aber für eine Positionierung nicht aus, und eine Mehrfachanordnung solcher Sensoren begegnet ähnlichen Problemen wie eine Kameralösung.

Um auch geringe Empfangsintensitäten nachweisen zu können, werden herkömmlich in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching).

Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Weiter lassen sie sich dann mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diesen Auswirkungen zu begegnen, werden in der Praxis mehrere SPADs gemeinsam ausgewertet.

Die EP 2 475 957 B1 offenbart einen optischen Entfernungsmesser, der auf SPADs basiert. Dabei werden Gruppen von SPADs gebildet und damit jeweils Lichtlaufzeiten gemessen. Die Gruppen sind anhand von Eigenschaften des erwarteten Empfangslichtflecks festgelegt, um dessen abstandsabhängige Form und Geometrie zu berücksichtigen. Von Eigenschaften der erfassten Objekte sind die Gruppen gänzlich unabhängig und helfen daher auch nicht bei einer Positionierung. Außerdem werden am Ende alle Zwischenergebnisse der Gruppen zu einer einzigen Entfernung verrechnet. Das Bilden von Gruppen dient dazu, die besondere statistische Natur von SPADs aufzufangen. Damit bestimmt zwar die EP 2 475 957 B1 ihren Entfernungswert auf eine besondere Weise, ist aber für eine Positionierung ebenso wenig geeignet wie jeder andere einfache Entfernungstaster.

Aus der US 2007/182949 A1 ist ein Verfahren zur Distanzmessung mit einem SPAD-Matrixempfänger bekannt. Dabei ist auch die Möglichkeit vorgesehen, einen Auswertungsschaltkreis mittels Multiplexer mit unterschiedlichen SPADs zu verbinden. Das dient aber dazu, sämtliche SPADs in einem zyklischen Frame auszuwerten, um insgesamt einen 3D-Bildsensor zu erhalten. Wie schon einleitend erwähnt, ist eine solche 3D-Bilderfassung für eine Positionierung in vielen Fällen zu aufwändig und liefert auch zu viele Bildinformationen für eine kostengünstige Auswertung. Zudem nutzt US 2007/182949 A1 ein Phasenverfahren, das wegen der begrenzten Periodizität nicht eindeutig ist und gerade bei Kantentreffern durch Mehrwegereflexion Fehler erzeugt. Die Erfassung einer Kante wiederum ist aber für eine Positionierung eines Objekts besonders geeignet.

Aus der DE 10 2012 223 689 B3 ist eine Messvorrichtung zur Referenzierung für einen digitalen Laserentfernungsmesser bekannt. Dabei sind zwei identische integrierte Schaltungen jeweils mit mindestens einer Detektoreinheit und mindestens einer Zeitmesseinheit vorgesehen. Die Zeitmesseinheiten sind innerhalb einer Schaltung einer Zeitmesseinheit fest zugeordnet. Allerdings kann durch einen Schalter alternativ eine Überkreuzverbindung gewählt werden, mit der die Zeitmesseinheiten der einen Schaltung mit den Detektoreinheiten der anderen Schaltung verbunden sind. Durch entsprechende Summen- und Differenzbildung können so diverse Referenzkorrekturen des gemessenen Entfernungswerts vorgenommen werden.

Die DE 10 2014 107 799 A1 offenbart eine 3D-Kamera, die durch ein Lock-In-Verfahren auf eine Modulationsfrequenz ihres Senders Fremdlicht ausblendet.

Daher ist Aufgabe der Erfindung, die optische Positionserfassung zu verbessern.

Diese Aufgabe wird durch einen optoelektronischen Sensor und ein Verfahren zur Positionserfassung eines Objekts nach Anspruch 1 beziehungsweise 14 gelöst. Mit mindestens einem Lichtsender wird ein Lichtsignal ausgesandt, das moduliert ist und so eine Lichtlaufzeitbestimmung zulässt. Trifft das Lichtsignal auf ein Objekt, so wird es dort reflektiert oder remittiert und in einem Lichtempfänger registriert. Der Lichtempfänger weist eine Vielzahl von beispielsweise zu einer Matrix angeordneten Lichtempfangselementen auf. Einzelne oder Gruppen der Lichtempfangselemente sind jeweils mit einer Entfernungsbestimmungseinheit verbunden, welche die Lichtlaufzeit des Lichtsignals misst und einen entsprechenden Abstandswert erzeugt. Folglich werden mehrere Abstandswerte von unterschiedlichen aktiven Teilbereichen des Lichtempfängers gemessen, die wiederum unterschiedlichen Teilbereichen des angetasteten Objekts entsprechen. Diese Abstandswerte werden in einer Steuer- und Auswertungseinheit weiterverarbeitet.

Die Erfindung geht nun von dem Grundgedanken aus, die aktiven Teilbereiche, zu denen ein Abstandswert gemessen wird, in für eine Positionserfassung geeigneter Weise zu konfigurieren. Durch Auswahl derjenigen Lichtempfangselemente, die mit einer Entfernungsbestimmungseinheit verbunden sind, werden gewünschte Objektbereiche ausgewählt, die eine sinnvolle Positionserkennung erlauben, beispielsweise an Kanten oder sonstigen hinsichtlich der Höhenkontur markanten Bereichen. Dadurch kann mit nur wenigen Abstandswerten eine für das Objekt und dessen Position charakteristische Höhenkontur vermessen werden. Die gemessenen Abstandswerte werden mit Referenzwerten einer Objektposition verglichen, etwa einer gewünschten Zielposition. Die Auswahl von aktiven Teilbereichen hat gewisse Gemeinsamkeiten mit einer herkömmlichen ROI (region of interest). Dort allerdings würde man erst zu sämtlichen Pixeln oder Lichtempfangselementen Bildinformationen gewinnen und dann außerhalb von ROIs verwerfen oder nicht weiter berücksichtigen. Erfindungsgemäß dagegen erfolgt die Beschränkung direkt am Lichtempfänger. Nicht verbundene Lichtempfangselemente bleiben zumindest effektiv ungenutzt, weil sie gar nicht mit einem Auslese- oder Auswertungsschaltkreis verbunden sind. Vorzugsweise werden sie sogar ganz ausgeschaltet.

Die Erfindung hat den Vorteil, dass eine einfache und robuste Positionserkennung ohne aufwändige und teure Justage ermöglicht wird. Der Sensor ist viel kompakter als ein übliches Kamerasystem und gegenüber einer 2D-Bilderfassung durch die Entfernungsbestimmung auch für zahlreiche Objekte viel genauer. Im Vergleich zu einer 3D-Kamera liegen Herstellungskosten und Baugröße bei einem kleinen Bruchteil, und es erfolgt eine implizite Reduktion der Tiefeninformationen auf einige wenige die Positionierung wesentliche Abstandswerte. Dabei ist eine Quasi-Echtzeitauswertung mit nur wenigen Millisekunden Ansprechzeit möglich, die für eine 3D-Bilderzeugung mit nachgelagerter Auswertung nur mit ungeheuren Rechenkapazitäten denkbar wäre.

Der Lichtempfänger ist bevorzugt in vier Quadranten aufgeteilt. Ein Vier-Quadrantenmatrixempfänger stellt eine einfache Bauform dar, mit der relevante Positionsinformationen besonders einfach und effektiv gewonnen werden können. Eine Entfernungsbestimmungseinheit ist jeweils einem Quadranten zugeordnet. Das bedeutet zunächst, dass die tatsächlich zugeordneten Lichtempfangselemente und damit ein jeweiliger aktiver Teilbereich zu demselben Quadranten gehören. Vorzugsweise ist die Zuordnung auch fixiert in dem Sinne, dass einer Entfernungsbestimmungseinheit überhaupt nur Lichtempfangselemente eines fest zugeordneten Quadranten zugeordnet werden können. Das erleichtert den Hardwareaufbau und ermöglicht modulare Quadranten.

Besonders bevorzugt sind vier Entfernungsbestimmungseinheiten vorgesehen, die jeweils einem anderen Quadranten zugeordnet sind. Das vereinfacht den Sensor weiter. In den meisten Anwendungen genügen die so gewonnenen vier Abstandswerte aus vier Richtungen für eine exakte Positionierung. Alternativ sind weitere Entfernungsbestimmungseinheiten vorhanden, sei es pro Quadrant oder für den gesamten Lichtempfänger.

Die Auswahleinheit ist bevorzugt dafür ausgebildet, die Verbindung zwischen Lichtempfangselementen und Entfernungsbestimmungseinheit für einen Quadranten auf einen anderen Quadranten zu übertragen. Damit wird aus allen Quadranten ohne zusätzlichen Konfigurationsaufwand eine vergleichbare Information gewonnen. Das ist besonders für symmetrische Werkstücke geeignet. Beim Übertragen können noch Anpassungen erfolgen, etwa eine Reskalierung, aber bevorzugt bleibt die Geometrie der aktiven Teilbereiche erhalten, d.h. es erfolgt eine kongruente Übertragung allein durch Spiegelung, Drehung und/oder Translation.

Die Steuer- und Auswertungseinheit ist bevorzugt dafür ausgebildet, das Objekt durch Veränderung der Verbindungen von Entfernungsbestimmungseinheiten und Lichtempfangselementen mit Hilfe der Auswahleinheit abzutasten und zusätzliche Abstandswerte zu gewinnen. Das bedeutet, dass die jeweils aktiven Teilbereiche des Lichtempfängers und damit die Objektbereiche, zu denen Abstandswerte gewonnen werden, dynamisch verändert werden. Dies geschieht vorzugsweise in einer festen Position des Objekts. Eine Anwendungsmöglichkeit ist, die Anzahl der Abtastwerte zur Bestimmung einer Position bei gleichbleibender Anzahl von Entfernungsbestimmungseinheiten durch Mehrfachmessung mit dynamisch veränderten aktiven Teilbereichen zu erhöhen. Ein anderes Beispiel ist, dass die aktiven Teilbereiche gemeinsam verschoben werden, um durch diese Abtastung eine gesuchte Zielposition zu finden und daraus gezielt abzuleiten, mit welcher Bewegung das Objekt in die Zielposition verbracht werden kann.

Die Auswahleinheit ist bevorzugt dafür ausgebildet, Entfernungsbestimmungseinheiten mit Lichtempfangselementen zu verbinden, die eine frei an einen Objektbereich anpassbare Anordnung bilden. Die aktiven Teilbereiche sind also gleichsam Freiformen, die noch nicht einmal zusammenhängend ausgebildet sein müssen. Durch beliebige Auswahl von Lichtempfangselementen kann ein aktiver Teilbereich an eine Kante oder ein sonstiges Profilmerkmal des Objekts angepasst werden. Dann genügen auch sehr wenige Abstandswerte, um Positionen klar und eindeutig zu erfassen.

Die Steuer- und Auswertungseinheit ist bevorzugt dafür ausgebildet, Abstandswerte in mindestens einer bestimmten Position eines Objekts als Referenzwerte einzulernen. Die Referenzwerte bilden also einen Satz von Abständen, die mit den jeweils gemessenen Abstandswerten verglichen werden, um eine Position eines Objekts zu erfassen, beispielsweise die Zielposition für den nächsten Verarbeitungsschritt. Es können auch Referenzwerte für mehrere Positionen oder einen ganzen Verfahrweg eingelernt werden, um mehrere Positionen oder gar die Bewegung eines Objekts zu erfassen

Die Steuer- und Auswertungseinheit ist bevorzugt dafür ausgebildet, aus dem Vergleich der Abstandswerte mit den Referenzwerten eine Steuerungsinformation für eine Positionsänderung des Objekts abzuleiten. Dabei wird also nicht nur anhand der gemessenen Abstandswerte geprüft, ob sich ein Objekt in einer bestimmten Position befindet, sondern auch eine Information abgeleitet, welche Bewegung, zumindest der Richtung, wenn nicht sogar auch dem Betrage nach, die bestimmte Position erreichen ließe oder ihr zumindest näher brächte. Wenn die Positionserfassung kontinuierlich während der Bewegung des Objekts erfolgt und Referenzwerte zu verschiedenen Positionen bekannt sind, können solche Steuerungsinformationen entsprechend genauer werden.

Die Lichtempfangselemente weisen bevorzugt jeweils eine Lawinenphotodiode auf, die jeweils mit einer Vorspannung oberhalb einer Durchbruchspannung vorgespannt und somit in einem Geiger-Modus betrieben ist. Bei der Entfernungsmessung ist die hohe Empfindlichkeit und Dynamikkompression von Lawinenphotodiodenelementen im Geiger-Modus besonders vorteilhaft.

Die Entfernungsbestimmungseinheiten weisen bevorzugt einen TDC (Time-to-Digital Converter) auf. Das ist ein bekanntes und relativ einfaches Bauteil, das mit hoher zeitlicher Auflösung Einzellichtlaufzeiten bestimmen kann. TDCs können direkt monolithisch in einem Kristall des Lichtempfängers integriert werden. Der TDC wird vorzugsweise zum Sendezeitpunkt gestartet und zum Empfangszeitpunkt durch den empfangenen Einzellichtpuls gestoppt. Andere Betriebsarten sind denkbar, etwa die TDCs jeweils mit dem Auslösen einer Lawine zu starten und dann zu einem bekannten Zeitpunkt anzuhalten, etwa dem Ende der Messperiode.

Das ausgesandte Lichtsignal weist bevorzugt einen Lichtpuls auf. Der Sensor misst also Entfernungen nach dem Pulsverfahren. Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren. Alternativ ist ein Phasenverfahren denkbar. Um den Erfassungsbereich großflächig auszuleuchten, sollte der Lichtsender beziehungsweise dessen Sendeoptik einen entsprechend großen Öffnungswinkel aufweisen. Die optische Ausgangsleistung und das beleuchtete Volumen lassen sich durch mehrere Lichtquellen, beispielsweise in einem VCSEL-Array, und/oder mehrere synchronisierte Lichtsender vergrößern.

In bevorzugter Weiterbildung weist ein Positioniersystem zum Positionieren von Objekten einen erfindungsgemäßen Sensor, eine Aktorik zum Bewegen des Objekts und eine Aktoriksteuerung auf. Das Objekt ist vorzugsweise ein Werkstück. Als Aktorik kommt jedes bekannte System in Frage, etwa ein Förderband, ein Kreuztisch, ein Drehtisch oder auch ein Roboterarm. Durch den erfindungsgemäßen Sensor wird auf einfache Weise eine präzise Positionierung ermöglicht.

Die Aktoriksteuerung ist bevorzugt dafür ausgebildet, das Objekt in eine Zielposition zu bewegen und dort mit dem Sensor zu prüfen, ob die Zielposition mit ausreichender Genauigkeit erreicht ist. Die Zielposition kann auch eine Zwischenposition sein. Der Sensor erkennt dies anhand der Abstandswerte sehr schnell und zuverlässig, zumal die aktiven Teilbereiche und damit die geprüften Objektabstände frei an jedes Werkstück anpassbar sind.

Die Aktoriksteuerung ist bevorzugt dafür ausgebildet, die Position des Objekts zu variieren, insbesondere nacheinander in zwei unterschiedliche Richtungen, bis der Sensor signalisiert, dass die eine Zielposition erreicht ist. Ein Anwendungsbeispiel ist, dass das Positioniersystem nach der dafür vorgesehenen Bewegung die Zielposition noch leicht verfehlt hat, was ihm durch den Sensor angezeigt wurde. Es ist aber auch möglich, die Zielposition iterativ beziehungsweise rein testend zu finden. Das wird erheblich erleichtert, wenn das Objekt nacheinander in X- und Y-Richtung in die Zielposition bewegt wird. Dafür ist ein Vier-Quadrantenempfänger besonders geeignet, weil dadurch gerade die benötigten Informationen für die X- und Y-Richtung geliefert werden. Die beiden Richtungen müssen aber nicht zwingend die X- und Y-Richtung sein und können auch einen anderen Winkel einschließen als einen rechten Winkel. Insbesondere bei Werkstücken, die zum Sensor hin eine rotationssymmetrische Kontur zeigen, sind praktisch alle Richtungen gleich gut geeignet.

Die Aktoriksteuerung ist bevorzugt dafür ausgebildet, die Position des Objekts auf Basis von Steuerungsinformationen des Sensors nachzuführen. Der Sensor liefert in diesem Fall nicht lediglich eine binäre Information, ob eine gewünschte Position erreicht ist, sondern leitet aus den gemessenen Abstandswerten und den Referenzwerten auch Steuerungsinformationen zum Nachführen ab. Damit wird eine präzise Positionierung weiter vereinfacht und beschleunigt.

Die Aktoriksteuerung ist bevorzugt dafür ausgebildet, das Objekt in mindestens eine Zielposition zu führen, um dort eine Zuordnung von Entfernungsbestimmungseinheiten und Lichtempfangselementen und/oder Referenzwerte einzulernen. So wird der Sensor für den weiteren Betrieb konfiguriert, beispielsweise indem an einzulernenden Positionen ein entsprechendes Signal an den Sensor ausgegeben wird. Der Sensor kann sich durch Einstellen der Zuordnung von Entfernungsbestimmungseinheiten zu Lichtempfangselementen, also Konfigurieren von aktiven Teilbereichen, besonders markante Profilmerkmale des Objekts aussuchen. Beispielsweise werden zunächst alle aktiven Teilbereiche ins Zentrum gelegt und dann in unterschiedliche Richtungen radial nach außen verfahren, bis sich jeweils ein Sprung des Abstandswerts entsprechend einer Kante zeigt. Auch eine Freiformanpassung der Geometrie der aktiven Bereiche ist möglich, insbesondere an einer bereits bekannten oder aufgefundenen Kante, um sie nachzuempfinden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Bevorzugt wird das Werkstück in eine Zielposition verfahren und die Zielposition mit dem erfindungsgemäßen Verfahren überprüft oder nachgeführt. Diese Zielposition kann dynamisch sein, d.h. eine Abfolge von Zielpositionen, um den Weg des Werkstücks zu verfolgen oder um mehrere Bearbeitungsschritte in verschiedenen Positionen durchzuführen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines optoelektronischen Sensors zur Positionserfassung;
- Fig. 2: ein vereinfachtes Ersatzschaltbild eines Lawinenphotodiodenelements im Geiger-Modus;
- Fig. 3: eine Draufsicht auf einen Lichtempfänger mit Aufteilung in vier Quadranten mit Illustration der konfigurierten aktiven Teilbereiche;
- Fig. 4: eine Draufsicht ähnlich Figur 3 mit frei an Konturen eines zu positionierenden Objekts angepassten aktiven Teilbereichen;
- Fig. 5: eine vereinfachte dreidimensionale Ansicht eines Positioniersystems mit Erfassung der Werkstückposition durch eine Ausführungsform eines optoelektronischen Sensors; und
- Fig. 6: eine Ansicht ähnlich Figur 5 mit einem anderen beispielhaften Werkstück.

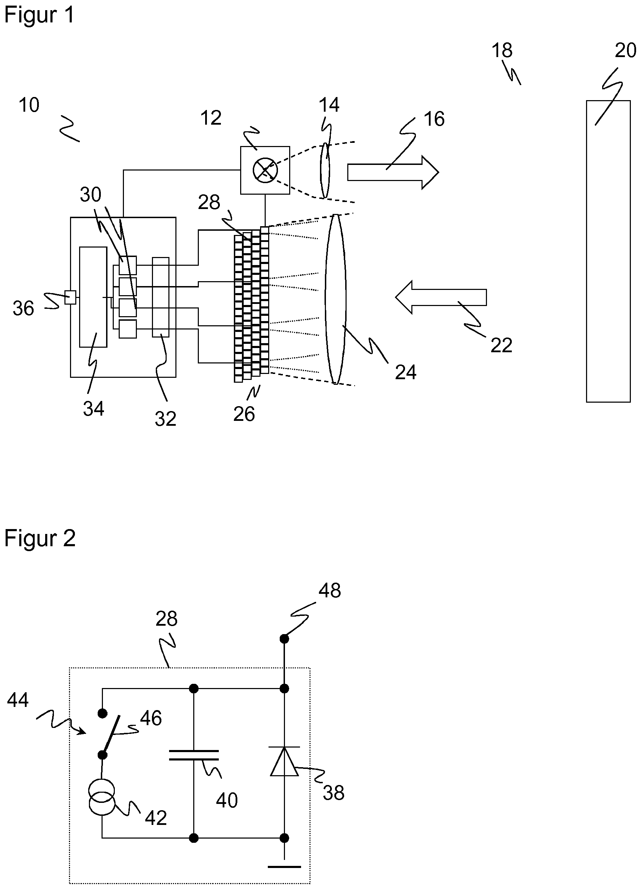

Figur 1 zeigt eine vereinfachte schematische Blockdarstellung eines optoelektronischen Sensors 10 zur Positionserfassung. Ein Lichtsender 12, beispielsweise eine LED oder eine Laserlichtquelle, sendet über eine Sendeoptik 14 ein Lichtsignal 16 in einen Überwachungsbereich 18 aus. Trifft es dort auf ein Objekt 20, so kehrt ein remittiertes oder reflektiertes Lichtsignal 22 über eine Empfangsoptik 24 zu einem Lichtempfänger 26 zurück. Dieser Lichtempfänger 26 weist eine Vielzahl von Lichtempfangselementen auf, die hier als Lawinenphotodiodenelemente 28 im Geigermodus oder SPADs ausgebildet sind und die als Pixel aufgefasst werden können. Die Erfindung wird am Beispiel einer SPAD-Matrix beschrieben, ist aber prinzipiell auch anwendbar, wenn der Lichtempfänger eine Pixelstruktur von Lichtempfangselementen aufweist, die keine SPADs sind.

Die Empfangssignale ausgewählter Lawinenphotodiodenelemente 28 werden von Entfernungsbestimmungseinheiten 30 ausgelesen und ausgewertet. Dargestellt sind beispielhaft vier Entfernungsbestimmungseinheiten 30 entsprechend einer auch in den weiteren Figuren dargestellten bevorzugten Ausführungsform. Die Erfindung lässt aber auch eine andere Anzahl von Entfernungsbestimmungseinheiten 30 zu, beispielsweise nur zwei oder drei. Umgekehrt wird mit weiteren Entfernungsbestimmungseinheiten 30, die auch möglich sind, der Aufbau komplexer, ohne dass ein gleich großer Nutzen erwächst. Trotzdem sind zumindest prinzipiell auch höchstens zehn, höchstens zwanzig oder höchstens fünfzig Entfernungsbestimmungseinheiten denkbar.

Die Entfernungsbestimmungseinheiten 30, die beispielsweise jeweils einen TDC (Time-to-Digital Converter) aufweisen, messen jeweils eine Lichtlaufzeit von Aussenden des Lichtsignals 16 bis zum Empfang des zurückkehrenden Lichtsignals 22. Das ist zugleich ein Abstandswert, der über die Lichtgeschwindigkeit in eine übliche Einheit umgerechnet werden könnte, aber gar nicht muss, sofern die etwas ungewöhnliche Einheit auch ansonsten verwendet wird, beispielsweise für Referenzwerte. Es ist auch denkbar, es nicht bei einer einzigen Lichtlaufzeitbestimmung zu belassen, sondern die Lichtlaufzeit zu mehreren Empfangsereignissen zu bestimmen, insbesondere in dem der TDC nach Zwischenspeichern der erfassten Lichtlaufzeit weiterläuft. Damit wird eine Mehrechofähigkeit erreicht, die beispielsweise für Messungen durch halbtransparente Objekte oder Glasscheiben, Messen bei Verunreinigungen durch Staub und dergleichen nützlich sein kann.

Eine Auswahleinheit 32 ist zwischen dem Lichtempfänger 26 und den Entfernungsbestimmungseinheiten 30 angeordnet. Mit Hilfe der Auswahleinheit 32 werden bestimmte Lawinenphotodiodenelemente 28 oder Pixel mit jeweils einer Entfernungsbestimmungseinheit 30 verbunden. Darüber kann ausgewählt werden, aus welchem aktiven Bereich des Lichtempfängers die jeweilige Entfernungsbestimmungseinheit einen Abstandswert berechnet, und dies legt den Objektbereich fest, zu dem der gemessene Abstand besteht. Lawinenphotodiodenelemente 28 außerhalb der aktiven Teilbereiche, die keiner Entfernungsbestimmungseinheit 30 zugeordnet sind, werden nicht nur nicht ausgelesen oder ausgewertet, sondern tatsächlich inaktiv gesetzt. Das ist beispielsweise durch Abschalten oder Herabsetzen der Vorspannung möglich und begrenzt die Leistungsaufnahme des Lichtempfängers 26.

Die Konfiguration durch die Auswahleinheit 32 kann je nach konkreter Implementierung Beschränkungen unterliegen, beispielsweise nur eine Maximalanzahl von Lawinenphotodiodenelemente 28 betreffen oder bestimmte Nachbarschaftsbeziehungen fordern. Prinzipiell sind aber aktive Teilbereiche beliebiger Geometrie, also Freiformflächen möglich, die sogar aus mehreren separierten Teilbereichen zusammengesetzt sein können. Die jeweiligen Einzelsignale der für eine Entfernungsbestimmungseinheit 30 ausgewählten Lawinenphotodiodenelemente 28 werden kombiniert, beispielweise aufsummiert. Es wäre denkbar, dass die Auswahleinheit 32 mittels Multiplexing die Zuordnung einer Entfernungsbestimmungseinheit 30 zu Lawinenphotodiodenelementen 28 umschaltet. Vorzugsweise ist das aber innerhalb einer Messung nicht vorgesehen, vielmehr sollen die aktiven Teilbereiche parallel ausgewertet werden.

Eine Steuer- und Auswertungseinheit 34 ist mit den Entfernungsbestimmungseinheiten 30 verbunden, so dass ihr pro Messung deren in diesem Beispiel vier Abstandswerte zur Verfügung stehen. Diese Abstandswerte werden in einer noch genauer zu erläuternden Weise genutzt, um durch Vergleich mit gespeicherten Referenzwerten die Position des Objekts 20 zu erfassen.

An einem Ausgang 36 kann die Steuer- und Auswertungseinheit 34 Messergebnisse bereitstellen, beispielsweise ein binäres Signal, ob das Objekt 20 eine bestimmte Zielposition einnimmt, oder eine Steuerungsinformation, mit welcher Bewegung die zu erreichen ist. Denkbar ist auch, die jeweils gemessenen Abstandswerte insbesondere samt dafür geltender aktiver Teilbereiche, also Verbindungen zwischen Entfernungsbestimmungseinheiten 30 und Lawinenphotodiodenelemente 28 auszugeben. Dann wäre auch denkbar, zumindest Teile der Funktionalität der Steuer- und Auswertungseinheit 34 nach extern zu verlagern.

Zumindest Teile der Entfernungsbestimmungseinheiten 30, der Auswahleinheit 32 und/oder der Steuer- und Auswertungseinheit 34 können auch mit den Lawinenphotodiodenelementen 28 auf einem gemeinsamen Chip integriert werden (z.B. ASIC, Application-Specific Integrated Circuit), dessen Fläche sich dann lichtempfindliche Bereiche der Lawinenphotodiodenelemente 28 und einzelnen oder Gruppen von Lawinenphotodiodenelemente 28 zugeordnete Schaltkreise zu deren Auswertung und Ansteuerung teilen.

Die Anordnung des Sensors 10 in Figur 1 ist rein beispielhaft zu verstehen. Es sind alternativ andere bekannte optische Lösungen einsetzbar, wie Autokollimation etwa mit einem Strahlteiler und einer gemeinsamen Optik oder die Anordnung des Lichtsenders 12 vor dem Lichtempfänger 26.

Figur 2 zeigt ein beispielhaftes vereinfachtes Ersatzschaltbild eines einzelnen Lawinenphotodiodenelements 28 im Geiger-Modus. In der Praxis handelt es sich um ein Halbleiterbauteil, dessen nicht dargestellter Aufbau hier als bekannt vorausgesetzt wird. Das Lawinenphotodiodenelement 28 zeigt zum einen das Verhalten einer Diode 38. Sie hat eine Kapazität, die durch einen parallel geschalteten Kondensator 40 repräsentiert wird. Der mögliche Lawinendurchbruch erzeugt Ladungsträger, deren Ursprung in dem Ersatzschaltbild als Stromquelle 42 dargestellt wird. Der Lawinendurchbruch wird durch ein auftreffendes Photon 44 ausgelöst, wobei dieser Vorgang wie ein Schalter 46 wirkt. Es gibt dann verschiedene Möglichkeiten, das Ausgangssignal 48 zu betrachten, auf die hier nicht näher eingegangen wird.

Im Bereitschaftszustand liegt über der Diode 38 eine Spannung oberhalb der Durchbruchspannung an. Erzeugt dann ein einfallendes Photon 44 ein Ladungsträgerpaar, so schließt dies gleichsam den Schalter 46, so dass die Diode 38 über die Stromquelle 42 mit Ladungsträgern geflutet wird. Neue Ladungsträger entstehen aber nur, solange das elektrische Feld stark genug bleibt. Wird durch die Stromquelle 42 der Kondensator 40 so weit entladen, dass die Durchbruchspannung unterschritten ist, so kommt die Lawine von selbst zum Erliegen ("passive quenching"). Danach lädt sich der Kondensator 40 wieder auf, bis wieder eine Spannung über der Durchbruchspannung an der Diode 38 anliegt. Es gibt alternative Ausgestaltungen, in denen die Lawine von außen erkannt und daraufhin eine Entladung unter die Durchbruchspannung ausgelöst wird ("active quenching").

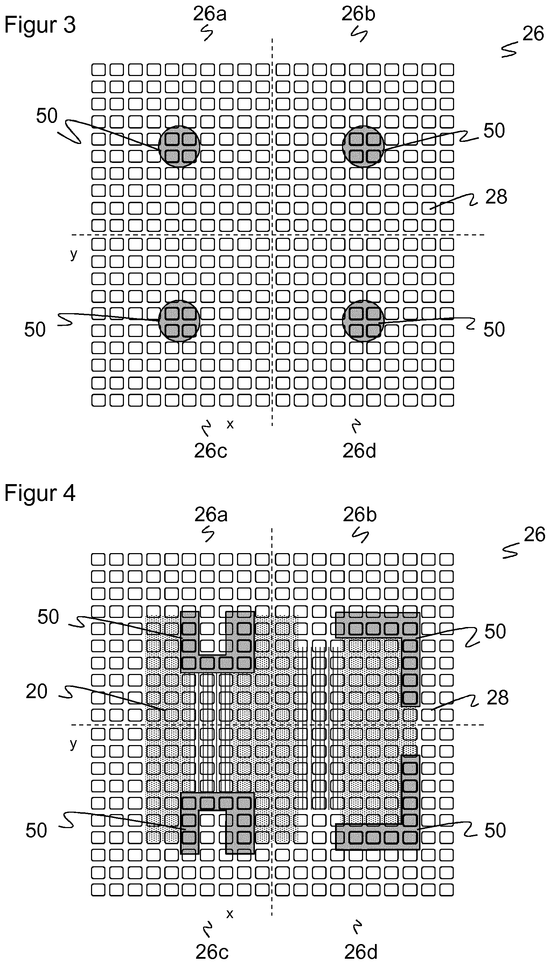

Figur 3 zeigt eine Draufsicht auf eine Ausführungsform des Lichtempfängers 26, der hier in vier Quadranten aufgeteilt ist. Dadurch wird ein sehr einfacher Aufbau ermöglicht, der dennoch für zahlreiche Anwendungsfälle genügend Informationen für eine Positionserfassung und auch ein Nachführen in eine gewünschte Position liefert.

In jedem Quadrant 26a-d ist ein aktiver Teilbereich 50 vorgesehen. Die entsprechenden Lawinenphotodiodenelemente 28 oder Pixel innerhalb eines Teilbereichs 50, die hier mit dickeren Linien dargestellt sind, werden demnach mittels der Auswahleinheit 32 einer jeweiligen Entfernungsbestimmungseinheit 30 zugeordnet. Somit ist jede der vier Entfernungsbestimmungseinheiten 30 für einen Quadranten 26a-d zuständig. Lawinenphotodiodenelemente 28 außerhalb der Teilbereiche 50, die mit dünneren Linien gezeigt sind, bleiben unberücksichtigt oder sind sogar inaktiv geschaltet. Es wurde bereits erwähnt, dass die Anzahl von vier Entfernungsbestimmungseinheiten 30 nur beispielhaft ist. Es kann also weitere aktive Teilbereiche 50 geben, vorzugsweise dann eine Anzahl zusätzlicher aktiver Teilbereiche 50, die ein Vielfaches von vier ist und jeden Quadranten 26a-d betrifft, aber auch solche, die nur in einigen Quadranten 26a-d vorgesehen sind oder mehrere Quadranten 26a-d übergreifen.

Die Konfiguration in Figur 3 sieht sehr einfach aus, ist aber für praktische Zwecke bei symmetrischen Objekten 20 tatsächlich denkbar. Dennoch handelt es sich nur um ein Beispiel. Die Konfiguration von aktiven Teilbereichen 50 mittels der Auswahleinheit 32 ist prinzipiell beliebig.

Im Falle von Symmetrien und einem Vier-Quadrantenempfänger als Lichtempfänger 26 kann es vorteilhaft sein, wenn die aktiven Teilbereiche 50 in allen Quadranten 26a-d gleichartig sind. Geometrisch ist damit Kongruenz gemeint, Drehungen, Spiegelungen oder Translationen bleiben möglich, oder die aktiven Teilbereiche 50 sind nur ähnlich, womit auch Reskalierungen erlaubt sind. Gleichartige Teilbereiche 50 sind besonders geeignet, weil damit die Informationen aus den Quadranten 26a-d vergleichbar werden, und besonders im Falle symmetrischer Objekte 20 ist das häufig auch eine optimale Konfiguration. Außerdem wird der Aufwand für die Konfiguration verringert, weil sie zwischen Quadranten 26a-d automatisch übertragen werden kann. Es ist sogar möglich, dies hardwareseitig abzubilden, also in die Auswahleinheit 32 so auszulegen, dass sie automatisch die Zuordnungen zwischen den Quadranten 26a-d überträgt und dafür möglicherweise besonders einfach aufgebaut ist.

Eine weitere Ausführungsform sieht vor, die aktiven Teilbereiche 50 dynamisch zu ändern, insbesondere in ihrer Position auf dem Lichtempfänger 26, alternativ oder zusätzlich auch in ihrer Form. Damit werden in einer Art Scanverfahren zusätzliche Abstandswerte gewonnen.

Figur 4 zeigt nochmals eine Draufsicht auf eine Ausführungsform des Lichtempfängers 26 mit vier Quadranten 26a-d. Hier sind andere aktive Teilbereiche 50 konfiguriert, die von der Möglichkeit Gebrauch machen, Freiformflächen praktisch beliebiger Geometrie zu konfigurieren. Das wird vorteilhaft genutzt, um Konturen eines im Hintergrund grau dargestellten Objekts 20 nachzubilden und damit für eine Position besonders charakteristische Abstandswerte zu bestimmen.

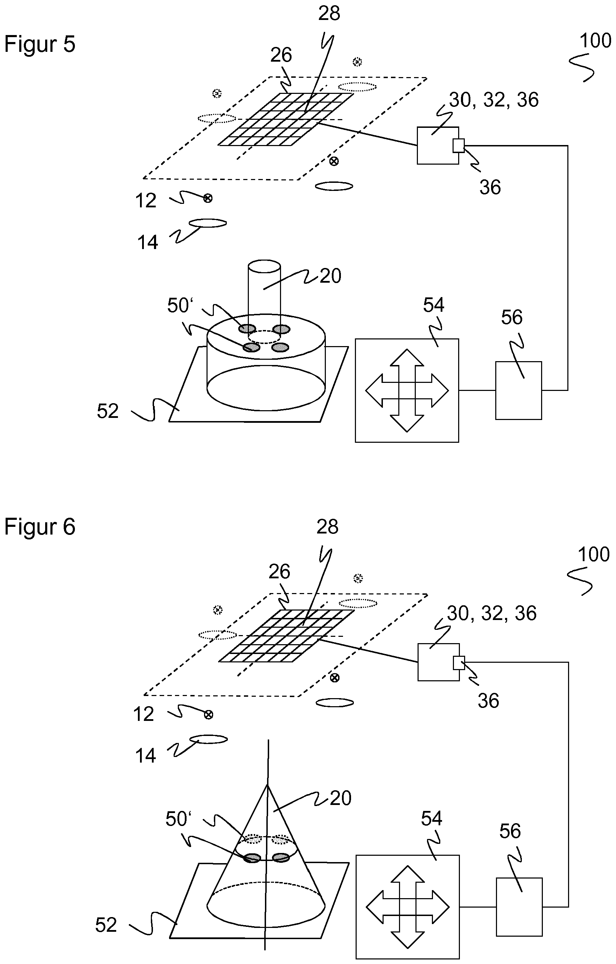

Figur 5 zeigt eine vereinfachte dreidimensionale Ansicht eines Positioniersystems 100 mit Erfassung der Position eines Objekts, hier vorzugsweise eines Werkstücks, durch den Sensor 10. Dabei sind der Übersicht halber mehrere Komponenten des Sensors 10 nicht dargestellt. Außerdem sind bei dem dargestellten Sensor 10 vier Lichtsender 12 mit jeweiligen Sendeoptiken 14 gezeigt, die jeweils einem Quadranten 26a-d zugeordnet sind. Das ist ein Beispiel, wie mit mehreren Lichtsendern 12 ein größerer Bereich beleuchtet beziehungsweise mehr optische Ausgangsleistung zur Verfügung gestellt werden kann. Die Lichtsender 12 sind untereinander synchronisiert, oder die Quadranten 26a-d arbeiten jeweils modular mit dem ihnen zugeordneten Lichtsender 12 zusammen.

Das Positioniersystem 100 weist weiterhin eine Aktorik auf, die hier sehr vereinfacht als Unterlage 52 für das Objekt 20 mit rein stilistisch als Block 54 gezeigter Bewegungsmöglichkeit in vorzugsweise zwei Richtungen sowie einer damit verbundenen Aktoriksteuerung 56 dargestellt ist. Der Sensor 10 ist über seinen Ausgang 36 mit der Aktoriksteuerung 56 verbunden. Weitere Verbindungen, etwa für Einlern- oder Aktivierungssignale an den Sensor 10, sind denkbar.

Eine für das gezeigte Objekt 20, beispielsweise ein Bolzen oder eine Schraube, denkbare geeignete Konfiguration der aktiven Teilbereiche 50 ist diejenige der Figur 3. In Figur 5 sind statt der aktiven Teilbereiche 50 die zugehörigen Objektbereiche 50' gezeigt. Es ist leicht zu erkennen, dass eine zentrierte Zielposition bei geeigneter Beabstandung der aktiven Teilbereiche 50 entsprechend dem Radius des inneren Objektbereichs sehr einfach und genau erfassbar wird.

Um nun eine Positionierung durchzuführen, sollte zunächst der Sensor 10 beziehungsweise dessen Steuer- und Auswertungseinheit 34 Referenzwerte für eine gewünschte Zielposition kennen, wobei man sich die Referenzwerte als diskretes Tiefenprofil aus Abstandswerten der aktiven Teilbereiche 50 vorstellen kann. Diese Konfiguration umfasst einerseits die Vorgabe geeigneter aktiver Teilbereiche 50 und andererseits das Einlernen von Abstandswerten in der Zielposition. Beides kann durch direkte Parametrierung in dem Sensor 10 erfolgen. Im Falle der Konfiguration von aktiven Teilbereichen 50 ist es auch meist sinnvoll, anhand einer bekannten Geometrie des vorgesehenen Objekts 20 und des ebenfalls bekannten inneren Aufbaus des Sensors 10 zu planen und dann gegebenenfalls durch Messungen nachzuprüfen, ob die Konfiguration funktioniert.

Vorzugsweise wird dann das Objekt 20 von der Aktorsteuerung in eine Zielposition verfahren. Während der Konfiguration muss eine andere Instanz als der Sensor 10 gewährleisten, dass es sich um die richtige Zielposition handelt, weil der Sensor 10 das erst lernen soll. Dann werden geeignete Teilbereiche 50 festgelegt, die nach Möglichkeit charakteristischen Merkmalen des Objekts 20 entsprechen, sofern dies nicht schon durch Parametrierung vorab erfolgt beziehungsweise um dies weiter zu verfeinern. Im Beispiel des dargestellten Objekts 20 sind Möglichkeiten dafür die beiden Radien des inneren und äußeren Teils des Objekts 20, allgemein eignen sich ausgeprägte Kanten und sonstige Höhenmerkmale. Anhand der jeweils gemessenen Abstandswerte kann plausibilisiert werden, ob die derzeit konfigurierten aktiven Teilbereiche 50 sinnvoll sind, beispielsweise bei Auswahl der in Figur 5 gezeigten Objektbereiche 50' gleiche Abstandswerte resultieren und bereits bei leichten Verschiebungen nicht mehr. Wenn die aktiven Teilbereiche 50 festliegen, werden die zugehörigen gemessenen Abstandswerte als Referenzwerte gespeichert. Das Einlernen kann für weitere Zielpositionen oder einen ganzen Bewegungsweg wiederholt werden.

Mit Hilfe der Referenzwerte kann dann im Betrieb durch den Sensor 10 durch Vergleich der Referenzwerte mit den jeweiligen gemessenen Abstandswerten festgestellt werden, ob eine Zielposition erreicht ist. Die Aktoriksteuerung 56 kann dazu die Zielposition mit vorgegebenen Steuerungsbefehlen anfahren und lediglich verifizieren. Stimmt die Zielposition noch nicht, so verfährt die Aktoriksteuerung 56 das Objekt testweise mit kleinen Beträgen, bis der Sensor 10 eine Rückmeldung über das Erreichen der Zielposition gibt. Dabei ist es sehr zweckmäßig, die Bewegung getrennt in X- und Y-Richtung durchzuführen, und dies wird durch einen Vier-Quadrantenaufbau optimal unterstützt. Ein derartiges iteratives Auffinden der Zielposition ist auch von Anfang an denkbar, wenn die Aktoriksteuerung 56 keine Kenntnis über die anzusteuernde Position hat, beispielsweise weil die anfängliche Position des Objekts 20 durch den jeweiligen Prozess nicht festliegt oder großen Toleranzen unterliegt.

Alternativ zu einem blinden Probieren von Positionen ist auch denkbar, dass der Sensor 10 entsprechende Steuerungsinformationen für eine geeignete Positionsänderung an die Aktoriksteuerung 56 zurückgibt, um die Zielposition sofort oder jedenfalls in schneller Regelung einzustellen. Im dargestellten Beispiel ist sofort klar, in welche Richtung bei drei gleichen und einem abweichenden Abstandswert korrigiert werden muss. Je nach Geometrie des Objekts 20 und Konfiguration der aktiven Teilbereiche 50 sind auch noch präzisere Steuerungsinformationen möglich, die nicht nur die Richtung, sondern auch den Betrag der Korrektur betreffen können.

Figur 6 zeigt ein anderes Beispiel für ein Objekt 20, das von dem Positioniersystem 100 an eine Zielposition geführt wird. In diesem Fall ist das Objekt 20 kegelförmig. Auch dafür kann die Konfiguration aktiver Teilbereiche 50 gemäß Figur 3 verwendet werden. Aufgrund der Kegelgeometrie geben die Abstandswerte hier sogar über die Höhe auf dem Kegelmantel eine quantitative Steuerungsinformation, solange noch Abweichungen von der zentrierten Zielposition bestehen.

Zusammenfassend wird in der dargestellten bevorzugten Ausführungsform ein kostengünstiger Vier-Quadrantenmatrixempfänger als Lichtempfänger 26 eingesetzt, der in dynamisch und prinzipiell in ihrer Geometrie frei anpassbaren aktiven Teilbereichen 50 durch Entfernungsmessung statische und dynamische Höhenprofilverschiebungen von Objekten 20 beziehungsweise Werkstücken erkennen kann und somit deren Platzierung oder Zentrierung. Dabei wird die Topologie beziehungsweise Flächeninformation des Objekts 20 über mehrere Abstandswerte ermittelt und anschließend weiter ausgewertet. Dies ermöglicht im Positionierungsprozess anhand von bekannten Referenzwerten des zu erkennenden Tiefenprofils aus der Flächeninformation heraus eine schnelle und zielgerichtete Überprüfung einer Zielposition sowie bei Bedarf deren Nachführung.

## Patentansprüche

1. Optoelektronischer Sensor (10) zur Positionserfassung eines Objekts (20) in einem Erfassungsbereich (18), insbesondere eines Werkstücks, wobei der Sensor (10) einen Lichtsender (12) zum Aussenden eines Lichtsignals (16) in den Erfassungsbereich (18), einen Lichtempfänger (26) mit einer Vielzahl von Lichtempfangselementen (28) zur Erfassung von Empfangslicht (22) aus dem Erfassungsbereich (18), mehrere Entfernungsbestimmungseinheiten (30) zur Bestimmung jeweils eines Abstandswertes zu einem Bereich (50') des Objekts (20) aus einer Lichtlaufzeit zwischen Aussenden des Lichtsignals (16) und Empfangen des an dem Objekt (20) remittierten oder reflektierten Lichtsignals (22), wobei die Entfernungsbestimmungseinheiten (30) jeweils mit einzelnen oder Gruppen von Lichtempfangselementen (28) verbunden sind, eine Steuer- und Auswerteeinheit (34) zur Weiterverarbeitung der Abstandswerte und eine Auswahleinheit (32) zum Verbinden von Entfernungsbestimmungseinheiten (30) mit Lichtempfangselementen (28) aufweist, **dadurch gekennzeichnet,**
**dass** die Auswahleinheit (32) dafür ausgebildet ist, Entfernungsbestimmungseinheiten (30) variabel mit Lichtempfangselementen (28) zu verbinden, um gewünschte Bereiche (50') des Objekts (20) auszuwählen und eine charakteristische Höhenkontur des Objekts (20) zu vermessen, und dass die Steuer- und Auswertungseinheit (34) zur Positionserfassung des Objekts (20) die Abstandswerte mit Referenzwerten in einer Zielposition des Objekts (20) vergleicht.

2. Sensor (10) nach Anspruch 1,
wobei der Lichtempfänger (26) in vier Quadranten (26a-d) aufgeteilt ist und die Entfernungsbestimmungseinheiten (30) jeweils einem Quadranten (26a-d) zugeordnet sind, insbesondere vier Entfernungsbestimmungseinheiten (30) vorgesehen sind, die jeweils einem anderen Quadranten (26a-d) zugeordnet sind.

3. Sensor (10) nach Anspruch 1 oder 2,
wobei die Auswahleinheit (32) dafür ausgebildet ist, die Verbindung zwischen Lichtempfangselementen (28) und Entfernungsbestimmungseinheit (30) für einen Quadranten (26a-d) auf einen anderen Quadranten (26a-d) zu übertragen.

4. Sensor (10) nach einem der vorhergehenden Ansprüche,
wobei die Steuer- und Auswertungseinheit (34) dafür ausgebildet ist, das Objekt (20) durch Veränderung der Verbindungen von Entfernungsbestimmungseinheiten (30) und Lichtempfangselementen (28) mit Hilfe der Auswahleinheit (32) abzutasten und zusätzliche Abstandswerte zu gewinnen.

5. Sensor (10) nach einem der vorhergehenden Ansprüche,
wobei die Auswahleinheit (32) dafür ausgebildet ist, Entfernungsbestimmungseinheiten (30) mit Lichtempfangselementen (28) zu verbinden, die eine frei an einen Objektbereich (50') anpassbare Anordnung bilden.

6. Sensor (10) nach einem der vorhergehenden Ansprüche,
wobei die Steuer- und Auswertungseinheit (34) dafür ausgebildet ist, Abstandswerte in mindestens einer bestimmten Position eines Objekts (20) als Referenzwerte einzulernen.

7. Sensor (10) nach einem der vorhergehenden Ansprüche,
wobei die Steuer- und Auswertungseinheit (34) dafür ausgebildet ist, aus dem Vergleich der Abstandswerte mit den Referenzwerten eine Steuerungsinformation für eine Positionsänderung des Objekts (20) abzuleiten.

8. Sensor (10) nach einem der vorhergehenden Ansprüche,
wobei die Lichtempfangselemente (28) jeweils eine Lawinenphotodiode aufweisen, die jeweils mit einer Vorspannung oberhalb einer Durchbruchspannung vorgespannt und somit in einem Geiger-Modus betrieben ist und/oder wobei die Entfernungsbestimmungseinheiten (30) einen Time-to-Digital Converter aufweisen.

9. Positioniersystem (100) zum Positionieren von Objekten (20) mit einem Sensor (10) nach einem der vorhergehenden Ansprüche, einer Aktorik (52, 54) zum Bewegen des Objekts (20) und einer Aktoriksteuerung (56).

10. Positioniersystem (100) nach Anspruch 9,
wobei die Aktoriksteuerung (56) dafür ausgebildet ist, das Objekt (20) in eine Zielposition zu bewegen und dort mit dem Sensor (10) zu prüfen, ob die Zielposition mit ausreichender Genauigkeit erreicht ist.

11. Positioniersystem (100) nach Anspruch 9 oder 10,
wobei die Aktoriksteuerung (56) dafür ausgebildet ist, die Position des Objekts (20) zu variieren, insbesondere nacheinander in zwei unterschiedlichen Richtungen, bis der Sensor (10) signalisiert, dass die eine Zielposition erreicht ist.

12. Positioniersystem (100) nach einem der Ansprüche 9 bis 11,
wobei die Aktoriksteuerung (56) dafür ausgebildet ist, die Position des Objekts (20) auf Basis von Steuerungsinformationen des Sensors (10) nachzuführen.

13. Positioniersystem (100) nach einem der Ansprüche 9 bis 12,
wobei die Aktoriksteuerung (56) dafür ausgebildet ist, das Objekt (20) in mindestens eine Zielposition zu führen, um dort eine Zuordnung von Entfernungsbestimmungseinheiten (30) und Lichtempfangselementen (28) und/oder Referenzwerte einzulernen.

14. Verfahren zur Positionserfassung eines Objekts (20), insbesondere eines Werkstücks, bei dem ein Lichtsignal (16) in einen Erfassungsbereich (18) ausgesandt und aus den Empfangssignalen von mehreren Bereichen (50) eines Lichtempfängers (26) mit einer Vielzahl von Lichtempfangselementen (28) aus einer Lichtlaufzeit zwischen Aussenden des Lichtsignals (16) und Empfangen des an dem Objekt (20) remittierten oder reflektierten Lichtsignals (22) von mehreren Entfernungsbestimmungseinheiten (30) jeweils ein Abstandswert zu einem Bereich (50') des Objekts (20) bestimmt wird und die Abstandswerte weiterverarbeitet werden, wobei die Entfernungsbestimmungseinheiten (30) jeweils mit Hilfe einer Auswahleinheit (32) mit einzelnen oder Gruppen von Lichtempfangselementen (28) verbunden werden,
**dadurch gekennzeichnet,**
**dass** die Auswahleinheit (32) Entfernungsbestimmungseinheiten (30) variabel mit Lichtempfangselementen (28) verbindet, um gewünschte Bereiche (50') des Objekts (20) auszuwählen, in denen jeweils ein Abstandswert gemessen wird, und eine charakteristische Höhenkontur des Objekts (20) zu vermessen, und dass zur Positionserfassung des Objekts (20) die Abstandswerte mit Referenzwerten in einer Zielposition des Objekts (20) verglichen werden.

15. Verfahren zur Positionierung eines Objekts (20), wobei das Objekt (20) in eine Zielposition verfahren und die Zielposition mit einem Verfahren nach Anspruch 14 überprüft oder nachgeführt wird.

## Claims

1. An optoelectronic sensor (10) for detecting the position of an object (20) in a detection region (18), in particular of a workpiece, the sensor (10) having a light transmitter (12) for transmitting a light signal (16) into the detection region (18), a light receiver (26) with a plurality of light receiving elements (28) for detecting received light (22) from the detection region (18), a plurality of distance determination units (30) for determining a respective distance value to a region (50') of the object (20) based on a light time of flight between transmission of the light signal (16) and reception of the remitted light signal (22) remitted or reflected at the object (20), wherein the distance determination units (30) are each connected to individual or groups of light receiving elements (28), a control and evaluation unit (34) for further processing the distance values, and a selection unit (32) for connecting distance determination units (30) to light receiving elements (28), **characterized in that** the selection unit (32) is configured to variably connect distance determination units (30) to light receiving elements (28) in order to select desired regions (50') of the object (20) and to measure a characteristic height contour of the object (20), and **in that** the control and evaluation unit (34) compares the distance values with reference values in a target position of the object (20) for the position detection of the object (20).

2. The sensor (10) according to claim 1,
wherein the light receiver (26) is divided into four quadrants (26a-d) and the distance determination units (30) are each assigned to one quadrant (26a-d), in particular four distance determination units (30) are provided which are each assigned to a different quadrant (26a-d).

3. The sensor (10) according to claim 1 or 2,
wherein the selection unit (32) is configured to transfer the connections between light receiving elements (28) and distance determining unit (30) for one quadrant (26a-d) to another quadrant (26a-d).

4. The sensor (10) according to any of the previous claims,
wherein the control and evaluation unit (34) is configured to scan the object (20) by changing the connections of distance determination units (30) and light receiving elements (28) by means of the selection unit (32) and to obtain additional distance values.

5. The sensor (10) according to any of the previous claims,
wherein the selection unit (32) is configured to connect distance determination units (30) to light receiving elements (28) forming an arrangement freely adaptable to an object region (50').

6. The sensor (10) according to any of the previous claims,
wherein the control and evaluation unit (34) is configured to learn distance values in at least one particular position of an object (20) as reference values.

7. The sensor (10) according to any of the previous claims,
wherein the control and evaluation unit (34) is configured to derive control information for a position change of the object (20) from the comparison of the distance values with the reference values.

8. The sensor (10) according to any of the previous claims,
wherein the light receiving elements (28) each comprise an avalanche photodiode which is biased with a bias voltage above a breakdown voltage and is thus operated in a Geiger mode and/or wherein the distance determination units (30) comprise a time-to-digital converter.

9. A positioning system (100) for positioning objects (20) with a sensor (10) according to one of the preceding claims, an actuator (52, 54) for moving the object (20) and an actuator control (56).

10. The positioning system (100) according to claim 9,
wherein the actuator control (56) is configured to move the object (20) into a target position and there to check with the sensor (10) whether the target position has been reached with sufficient accuracy.

11. The positioning system (100) according to claim 9 or 10,
wherein the actuator control (56) is configured to vary the position of the object (20), in particular successively in two different directions, until the sensor (10) signals that the target position has been reached.

12. The positioning system (100) according to any of claims 9 to 11,
wherein the actuator control (56) is configured to track the position of the object (20) based on control information of the sensor (10).

13. The positioning system (100) according to any of claims 9 to 12,
wherein the actuator control (56) is configured to guide the object (20) into at least one target position in order to teach an assignment of distance determination units (30) and light receiving elements (28) and/or reference values.

14. A method for detecting the position of an object (20), in particular a workpiece, wherein a light signal (16) is transmitted into a detection region (18) and a respective distance value to a region (50') of the object (20) is determined by a plurality of distance determining units (30) from the received signals from a plurality of regions (50) of a light receiver (26) with a plurality of light receiving elements (28) based on a light time of flight between transmission of the light signal (16) and reception of the remitted light signal (22) remitted or reflected at the object (20), and the distance values are further processed, wherein the distance determination units (30) are each connected to individual or groups of light receiving elements (28) by means of a selection unit (32),
**characterized in that** the selection unit (32) variably connects distance determination units (30) to light receiving elements (28) in order to select desired regions (50') of the object (20) where a respective distance value is measured, and to measure a characteristic height contour of the object (20), and **in that** for position detection of the object (20) the distance values are compared with reference values in a target position of the object (20).

15. A method for positioning an object (20), wherein the object (20) is moved into a target position and the target position is checked or tracked with a method according to claim 14.

## Revendications

1. Capteur optoélectronique (10) pour détecter la position d'un objet (20) dans une zone de détection (18), en particulier d'une pièce à oeuvrer, le capteur (10) comportant un émetteur de lumière (12) destiné à émettre un signal lumineux (16) dans la zone de détection (18), un récepteur de lumière (26) pourvu d'une multitude d'éléments récepteurs de lumière (28) pour détecter une lumière de réception (22) en provenance de la zone de détection (18), plusieurs unités de détermination de distance (30) pour déterminer une valeur de distance respective par rapport à une zone (50') de l'objet (20) à partir d'un temps de parcours de lumière entre l'émission du signal lumineux (16) et la réception du signal lumineux (22) réémis ou réfléchi sur l'objet (20), les unités de détermination de distance (30) étant reliées chacune à des éléments récepteurs de lumière (28) individuels ou à des groupes de ceux-ci, une unité de commande et d'évaluation (34) pour traiter les valeurs de distance et une unité de sélection (32) pour connecter des unités de détermination de distance (30) à des éléments récepteurs de lumière (28),
**caractérisé en ce que**
l'unité de sélection (32) est réalisée pour connecter des unités de détermination de distance (30) de façon variable à des éléments récepteurs de lumière (28) pour sélectionner des zones désirées (50') de l'objet (20) et pour mesurer un contour en hauteur caractéristique de l'objet (20), et **en ce que** l'unité de commande et d'évaluation (34) compare les valeurs de distance à des valeurs de référence dans une position cible de l'objet (20), afin de détecter la position de l'objet (20).

2. Capteur (10) selon la revendication 1,
dans lequel le récepteur de lumière (26) est subdivisé en quatre quadrants (26a - d), et les unités de détermination de distance (30) sont associées chacune à un quadrant (26a - d), et il est prévu en particulier quatre unités de détermination de distance (30) qui sont associées chacune à un autre quadrant (26a - d).

3. Capteur (10) selon la revendication 1 ou 2,
dans lequel l'unité de sélection (32) est réalisée pour transférer à un autre quadrant (26a - d) la connexion entre les éléments récepteurs de lumière (28) et l'unité de détermination de distance (30) pour un quadrant (26a - d).

4. Capteur (10) selon l'une des revendications précédentes,
dans lequel l'unité de commande et d'évaluation (34) est réalisée pour balayer l'objet (20) par modification des connexions des unités de détermination de distance (30) et des éléments récepteurs de lumière (28) à l'aide de l'unité de sélection (32) et pour obtenir des valeurs de distance supplémentaires.

5. Capteur (10) selon l'une des revendications précédentes,
dans lequel l'unité de sélection (32) est réalisée pour connecter des unités de détermination de distance (30) à des éléments récepteurs de lumière (28) qui constituent un agencement librement adaptable à une zone d'objet (50').

6. Capteur (10) selon l'une des revendications précédentes,
dans lequel l'unité de commande et d'évaluation (34) est réalisée pour apprendre comme valeurs de référence des valeurs de distance dans au moins une position déterminée d'un objet (20).

7. Capteur (10) selon l'une des revendications précédentes,
dans lequel l'unité de commande et d'évaluation (34) est réalisée pour dériver une information de commande pour une modification de la position de l'objet (20) à partir de la comparaison des valeurs de distance aux valeurs de référence.

8. Capteur (10) selon l'une des revendications précédentes,
dans lequel les éléments récepteurs de lumière (28) comprennent chacun une photodiode à avalanche qui est polarisée avec une tension de polarisation supérieure à une tension de claquage et qui fonctionne donc en mode Geiger, et/ou les unités de détermination de distance (20) présentent un convertisseur dit TDC (Time-to-Digital-Converter).

9. Système de positionnement (100) pour positionner des objets (20), comportant un capteur (10) selon l'une des revendications précédentes, un ensemble actionneur (52, 54) pour déplacer l'objet (20), et une commande d'ensemble actionneur (56).

10. Système de positionnement (100) selon la revendication 9,
dans lequel la commande d'ensemble actionneur (56) est réalisée pour déplacer l'objet (20) jusque dans une position cible et pour y vérifier au moyen du capteur (10) si la position cible est atteinte avec une précision suffisante.

11. Système de positionnement (100) selon la revendication 9 ou 10,
dans lequel la commande d'ensemble actionneur (56) est réalisée pour faire varier la position de l'objet (20), en particulier successivement dans deux directions différentes, jusqu'à ce que le capteur (10) signale que ladite position cible est atteinte.

12. Système de positionnement (100) selon l'une des revendications 9 à 11,
dans lequel la commande d'ensemble actionneur (56) est réalisée pour faire suivre la position de l'objet (20) en fonction des informations de commande du capteur (10).

13. Système de positionnement (100) selon l'une des revendications 9 à 12,
dans lequel la commande d'ensemble actionneur (56) est réalisée pour guider l'objet (20) jusque dans au moins une position cible afin d'y apprendre une association des unités de détermination de distance (30) et des éléments récepteurs de lumière (28) et/ou d'y apprendre des valeurs de référence.

14. Procédé pour détecter la position d'un objet (20), en particulier d'une pièce à œuvrer, dans lequel un signal lumineux (16) est émis dans une zone de détection (18), et à partir des signaux de réception de plusieurs zones (50) d'un récepteur de lumière (26) pourvu d'une multitude d'éléments récepteurs de lumière (28), une valeur de distance respective par rapport à une zone (50') de l'objet (20) est déterminée par plusieurs unités de détermination de distance (30) à partir d'un temps de parcours de lumière entre l'émission du signal lumineux (16) et la réception du signal lumineux (22) réémis ou réfléchi sur l'objet (20), et les valeurs de distance sont traitées, les unités de détermination de distance (30) étant connectées chacune à des éléments récepteurs de lumière (28) individuels ou à des groupes de ceux-ci à l'aide d'une unité de sélection (32),
**caractérisé en ce que**
l'unité de sélection (32) connecte des unités de détermination de distance (30) de façon variable à des éléments récepteurs de lumière (28) pour sélectionner des zones désirées (50') de l'objet (20) dans lesquelles une valeur de distance respective est mesurée, et pour mesurer un contour en hauteur caractéristique de l'objet (20), et **en ce que** pour détecter la position de l'objet (20), les valeurs de distance sont comparées à des valeurs de référence dans une position cible de l'objet (20).

15. Procédé pour positionner un objet (20), dans lequel l'objet (20) est déplacé jusque dans une position cible, et la position cible est vérifiée ou adaptée par un procédé selon la revendication 14.
